# EUROPEAN PATENT SPECIFICATION

(11) **EP 3 275 917 B1**
(45) Date of publication and mention of the grant of the patent: **21.08.2019**
(21) Application number: 16768198.0
(22) Date of filing: 09.02.2016
(51) Int. Cl.: C08G 63/199, C08L 67/03

(54) **POLYMER, RESIN COMPOSITION, AND RESIN MOLDED ARTICLE**
POLYAMER, HARZZUSAMMENSETZUNG UND HARZFORMARTIKEL
POLYMÈRE, COMPOSITION DE RÉSINE, ET ARTICLE MOULÉ EN RÉSINE

(30) Priority: 23.03.2015 JP 2015060213
(43) Date of publication of application: 31.01.2018
(73) Proprietor: JSR Corporation, Tokyo 105-8640 (JP)
(72) Inventor: ANABUKI Shoma, Tokyo 105-8640 (JP); HIFUMI Ryoyu, Tokyo 105-8640 (JP); TATARA Ryoji, Tokyo 105-8640 (JP); KADOTA Toshiaki, Tokyo 105-8640 (JP); MIYAKI Nobuyuki, Tokyo 105-8640 (JP); HATASE Kazuki, Tokyo 105-8640 (JP)
(74) Representative: TBK
(86) International application number: PCT/JP2016/053875
(87) International publication number: WO 2016/152295

(56) References cited:
- WO-A1-2014/080908
- WO-A1-2014/080908
- JP-A- H1 171 316
- JP-A- S53 105 591
- JP-A- 2013 221 980
- JP-A- 2014 132 000
- JP-A- 2014 189 605
- JP-A- 2015 178 605

## Description

### TECHNICAL FIELD

The present invention relates to a polymer, a resin composition and a resin molded product.

### BACKGROUND ART

A polymer obtained by copolymerizing a dihydric phenol monomer and an aromatic dicarboxylic acid monomer has high heat resistance and is highly transparent, thus being widely used in the fields related to electricity, automobiles, machineries, and the like. In these fields, the polymer is generally dissolved in a solvent to prepare a resin composition, and then a resin molded product such as a film is formed from the resin composition to find various uses.

For example, Japanese Unexamined Patent Application, Publication No. H8-269214 discloses a film formed from a resin composition prepared by dissolving, in methylene chloride, a polyarylate obtained by copolymerizing bisphenol A, which is a dihydric phenol monomer, with terephthalic acid and isophthalic acid, which are aromatic dicarboxylic acid monomers.

In recent years, meanwhile, the use of halogen organic solvents such as methylene chloride have been avoided because of concerns about adverse effects on the environment and human health, and thus replacing them with halogen-free organic solvents have been desired. However, the polyarylate mentioned in Japanese Unexamined Patent Application, Publication No. H8-269214 has a low degree of solubility in a halogen-free organic solvent, and it is therefore difficult to obtain, from the polyarylate, a highly versatile resin composition which finds various uses.

In this regard, Japanese Unexamined Patent Application, Publication No. 2003-313491 suggests that a polyarylate prepared by using, as a dihydric phenol monomer, a sulfur atom-containing monomer such as bis(4-hydroxyphenyl) sulfone has increased solubility in a halogen-free organic solvent.

However, the polyalylate mentioned in Japanese Unexamined Patent Application, Publication No. 2003-313491 has still insufficient solubility in various types of organic solvents. Furthermore, the polymer needs to be resistant to heat so as to inhibit the heat deterioration of the resin molded product, but it is difficult to impart improved heat resistance to the polyalylate while maintaining high formability.

WO 2014 / 080908 A1 relates to a negative photosensitive resin composition containing: metal oxide particles of a metal selected from the group consisting of titanium, barium, hafnium, tantalum, tungsten, yttrium, and zirconium; (B) an alkali-soluble polyester resin having a radical polymerizable group and an aromatic ring; (C) a multi-functional (meth) acryloyl compound; and (D) a photopolymerization initiator.

### PRIOR ART DOCUMENTS

### PATENT DOCUMENTS

Patent Document 1: Japanese Unexamined Patent Application, Publication No. H8-269214
Patent Document 2: Japanese Unexamined Patent Application, Publication No. 2003-313491

### SUMMARY OF THE INVENTION

### PROBLEMS TO BE SOLVED BY THE INVENTION

The present invention was made in view of the foregoing circumstances, and an object of the present invention is to provide a polymer having increased solubility in various types of organic solvents, improved formability and improved heat resistance, and a resin composition and a resin molded product containing the polymer.

### MEANS FOR SOLVING THE PROBLEMS

According to an aspect of the invention made for solving the aforementioned problems, a polymer has a first structural unit represented by the following formula (1), a second structural unit represented by the following formula (2), and a third structural unit represented by the following formula (3). 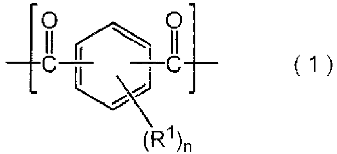 In the formula (1), R¹ represents a halogen atom, a monovalent hydrocarbon group having 1 to 20 carbon atoms, a monovalent halogenated hydrocarbon group having 1 to 20 carbon atoms, a nitro group or a cyano group; and n is an integer of 0 to 4, wherein, in a case where n is no less than 2, a plurality of R¹s may be identical or different, wherein the plurality of R¹s optionally taken together may represent a ring structure through binding. 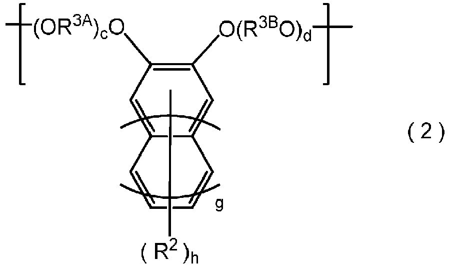 In the formula (2), R² represents a halogen atom, a monovalent hydrocarbon group having 1 to 20 carbon atoms, a monovalent halogenated hydrocarbon group having 1 to 20 carbon atoms, a nitro group or a cyano group; g is an integer of 0 to 2; h is an integer of 0 to 8, wherein, in a case where h is no less than 2, a plurality of R²s may be identical or different, wherein the plurality of R²s optionally taken together may represent a ring structure through binding; R^{3A} and R^{3B} each independently represent a methylene group or an alkylene group having 2 to 4 carbon atoms; c is an integer of 0 to 2, wherein, in a case where c is 2, two R^{3A}s may be identical or different; and d is an integer of 0 to 2, wherein, in a case where d is 2, two R^{3B}s may be identical or different. 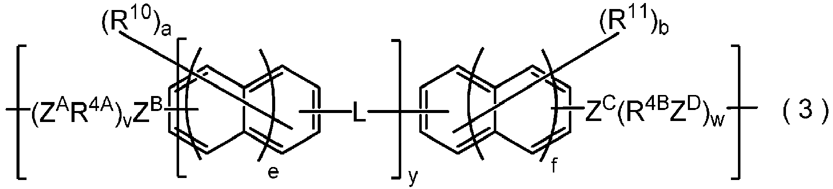 In the formula (3), R¹⁰ and R¹¹ each independently represent a halogen atom, a monovalent hydrocarbon group having 1 to 20 carbon atoms, a monovalent halogenated hydrocarbon group having 1 to 20 carbon atoms, a nitro group or a cyano group; e and f are each independently an integer of 0 to 2; a and b are each independently an integer of 0 to 8, wherein, in a case where a is no less than 2, a plurality of R¹⁰s may be identical or different, wherein the plurality of R¹⁰s optionally taken together may represent a ring structure through binding, and in a case where b is no less than 2, a plurality of R¹¹s may be identical or different, wherein and the plurality of R¹¹s optionally taken together may represent a ring structure through binding; Z^{A} to Z^{D} each independently represent -O- or -S-; R^{4A} and R^{4B} each independently represent a methylene group or an alkylene group having 2 to 4 carbon atoms; v is an integer of 0 to 2, wherein, in a case where v is 2, two R^{4A}s may be identical or different, and two Z^{A} may be identical or different; w is an integer of 0 to 2, wherein, in a case where w is 2, two R^{4B}s may be identical or different, and two Z^{D} may be identical or different; L represents a divalent group represented by the following formula (3-1); and y is an integer of 1 to 3, wherein, in a case where y is no less than 2, a plurality of Ls may be identical or different, and in a case where y is no less than 2 and a is no less than 1, a plurality of R¹⁰s may be identical or different. 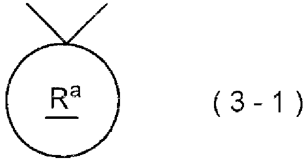 In the formula (3-1), R^{a} represents a divalent alicyclic hydrocarbon group having 5 to 30 ring atoms or a divalent fluorinated alicyclic hydrocarbon group having 5 to 30 ring atoms.

Further aspects of the present invention involve a resin composition containing the polymer and an organic solvent, and a resin molded product containing the polymer.

As referred to herein, the "hydrocarbon group" may involve a chain hydrocarbon group and a cyclic hydrocarbon group. The "hydrocarbon group" may be either a saturated hydrocarbon group or an unsaturated hydrocarbon group. The "chain hydrocarbon group" as referred to means a hydrocarbon group not including a ring structure but constructed with only a chain structure. The "chain hydrocarbon group" may involve both a straight chain hydrocarbon group and a branched hydrocarbon group. The "cyclic hydrocarbon group" as referred to means a hydrocarbon group constructed with a ring structure and may involve both an alicyclic hydrocarbon group and an aromatic hydrocarbon group. The "alicyclic hydrocarbon group" as referred to means a hydrocarbon group which includes not an aromatic ring structure but only an alicyclic structure as the ring structure, and may involve both a monocyclic alicyclic hydrocarbon group and a polycyclic alicyclic hydrocarbon group. However, it is not necessary to be constructed with only an alicyclic structure, and a chain structure may be included as a part thereof. The "aromatic hydrocarbon group" as referred to means a hydrocarbon group which includes an aromatic ring structure as the ring structure, and may involve both a monocyclic aromatic hydrocarbon group and a polycyclic aromatic hydrocarbon group. However, it is not necessary to be constructed with only an aromatic ring structure, and a chain structure and/or an alicyclic structure may be included as a part thereof. The term "number of ring atoms" as referred to means the number of atoms constituting a ring structure. In a case where the ring structure is polycyclic, it means the number of atoms constituting the polycyclic structure.

### Effects of the Invention

The present invention is capable of providing a polymer having increased solubility in various types of organic solvents, improved formability and improved heat resistance, and a resin composition and a resin molded product containing the polymer.

### BRIEF DESCRIPTION OF THE DRAWINGS

FIG. 1 shows a ¹H-NMR spectrum of a polymer of Example 1.
FIG. 2 shows a ¹H-NMR spectrum of a polymer of Example 7.

### DESCRIPTION OF EMBODIMENTS

The following will describe in detail, a polymer, a resin composition and a resin molded product according to embodiments of the present invention.

### Polymer

The polymer according to an embodiment of the present invention (hereinafter, may be also referred to as "(A) polymer" or "polymer (A)") has the first structural unit, the second structural unit and the third structural unit. The polymer (A) may have two or more types of each of the above structural units. It is to be noted that, as long as the polymer (A) has the first, second and third structural units, the arrangement of each structural unit and other structures of the polymer (A) are not particularly limited. For example, the polymer (A) may have any structural unit(s) other than the first to third structural units. Alternatively, the polymer (A) may have a repeating unit (a) that includes the first and second structural units and a repeating unit (b) that includes the first and third structural units as will be described below, and may further have other repeating unit(s).

The polymer (A) has, by virtue of the first, second and third structural units, increased solubility in various types of organic solvents, improved formability and improved heat resistance. Although not necessarily clarified, the reason for achieving the effects described above due to the polymer (A) having the aforementioned constitution is mainly inferred as in the following (1) to (3).
(1) The incorporation of the second structural unit derived from an ortho-substituted catechol monomer allows linearity of polymer chains to be inhibited due to v-shaped portions in the polymer chains, whereby an increase in the solubility in various types of organic solvents is enabled.
(2) The incorporation of the second structural unit enables inhibition of the linearity of the polymer chains, whereby an appropriate adjustment of fluidity during the formation is enabled. The polymer (A) accordingly has improved formability.
(3) The incorporation of the third structural unit which has a structure in which aromatic rings bind to each other through a relatively bulky ring structure enables an appropriate adjustment of the rigidity of the polymer chains. The polymer (A) accordingly has improved formability.

The following will describe the first, second and third structural units and other structural units which may be optionally contained in the polymer (A).

### First Structural Unit

The first structural unit is represented by the following formula (1).

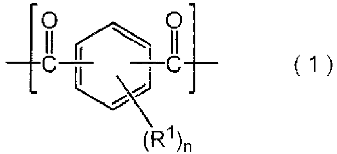

In the above formula (1), R¹ represents a halogen atom, a monovalent hydrocarbon group having 1 to 20 carbon atoms, a monovalent halogenated hydrocarbon group having 1 to 20 carbon atoms, a nitro group or a cyano group; and n is an integer of 0 to 4, wherein, in a case where n is no less than 2, a plurality of R¹s may be identical or different, wherein the plurality of R¹s optionally taken together may represent the ring structure through binding.

The halogen atom which may be represented by R¹ is exemplified by a fluorine atom, a chlorine atom, a bromine atom, an iodine atom, and the like.

The monovalent hydrocarbon group having 1 to 20 carbon atoms which may be represented by R¹ is exemplified by a monovalent chain hydrocarbon group, a monovalent alicyclic hydrocarbon group, a monovalent aromatic hydrocarbon group, and the like.

Examples of the monovalent chain hydrocarbon group include:
alkyl groups such as a methyl group, an ethyl group, an n-propyl group, an i-propyl group, an n-butyl group, an i-butyl group, a sec-butyl group, a t-butyl group and an n-pentyl group;
alkenyl groups such as an ethenyl group, a propenyl group, a butenyl group and a pentenyl group;
alkynyl groups such as an ethynyl group, a propynyl group, a butynyl group and a pentenyl group; and the like.

Examples of the monovalent alicyclic hydrocarbon group include:
monocyclic cycloalkyl groups such as a cyclopropyl group, a cyclobutyl group, a cyclopentyl group and a cyclohexenyl group;
polycyclic cycloalkyl groups such as a norbornyl group and an adamantyl group;
monocyclic cycloalkenyl groups such as a cyclopropenyl group, a cyclobutenyl group, a cyclopentenyl group and a cyclohexyl group;
polycyclic cycloalkenyl groups such as a norbornenyl group; and the like.

Examples of the monovalent aromatic hydrocarbon group include:
aryl groups such as a phenyl group, a tolyl group, a xylyl group, a naphthyl group and an anthryl group;
aralkyl groups such as a benzyl group, a phenethyl group, a phenylpropyl group and a naphthylmethyl group; and the like.

The monovalent halogenated hydrocarbon group having 1 to 20 carbon atoms which may be represented by R¹ is exemplified by a group obtained by substituting a part or all of hydrogen atoms included in the monovalent hydrocarbon group having 1 to 20 carbon atoms which is exemplified as the group represented by R¹ with halogen atoms such as a fluorine atom, a chlorine atom, a bromine atom, an iodine atom, and the like.

R¹ represents, in light of an improvement of the polymerization reactivity of the monomer for providing the first structural unit, preferably a halogen atom, a monovalent hydrocarbon group having 1 to 6 carbon atoms, a monovalent halogenated hydrocarbon group having 1 to 6 carbon atoms, a nitro group or a cyano group, and more preferably a fluorine atom, a chlorine atom, a methyl group, a nitro group or a cyano group. From the same perspective, n is preferably 0 or 1, and more preferably 0.

Provided that the total amount of the first, second and third structural units contained in the polymer (A) accounts for 100 mol%, the lower limit of the proportion of the first structural unit contained in the polymer (A) is preferably 10 mol%, more preferably 15 mol%, and still more preferably 20 mol%. The upper limit of the proportion is preferably 95 mol%, more preferably 90 mol%, and still more preferably 85 mol%. When the proportion falls within the above range, more appropriate adjustments of the solubility in various types of organic solvents, the glass transition temperature, and the fluidity during the formation are enabled.

### Second Structural Unit

The second structural unit is represented by the following formula (2).

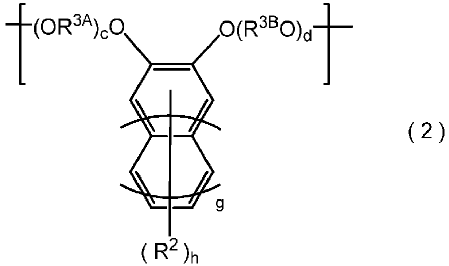

In the above formula (2), R² represents a halogen atom, a monovalent hydrocarbon group having 1 to 20 carbon atoms, a monovalent halogenated hydrocarbon group having 1 to 20 carbon atoms, a nitro group or a cyano group; g is an integer of 0 to 2; h is an integer of 0 to 8, wherein, in a case where h is no less than 2, a plurality of R²s may be identical or different, wherein the plurality of R²s optionally taken together may represent the ring structure through binding; R^{3A} and R^{3B} each independently represent a methylene group or an alkylene group having 2 to 4 carbon atoms; c is an integer of 0 to 2, wherein, in a case where c is 2, two R^{3A}s may be identical or different; and d is an integer of 0 to 2, wherein, in a case where d is 2, two R^{3B}s may be identical or different.

The halogen atom which may be represented by R² is exemplified by halogen atoms similar to those exemplified as the halogen atom which may be represented by R¹.

The monovalent hydrocarbon group having 1 to 20 carbon atoms which may be represented by R² is exemplified by groups similar to those exemplified as the monovalent hydrocarbon group having 1 to 20 carbon atoms which may be represented by R¹.

The monovalent halogenated hydrocarbon group having 1 to 20 carbon atoms which may be represented by R² is exemplified by groups similar to those exemplified as the monovalent halogenated hydrocarbon group having 1 to 20 carbon atoms which may be represented by R¹.

R² represents preferably a monovalent hydrocarbon group having 1 to 10 carbon atoms, more preferably a monovalent chain hydrocarbon group having 1 to 10 carbon atoms, still more preferably a monovalent branched hydrocarbon group having 1 to 10 carbon atoms, and particularly preferably an i-butyl group, a sec-butyl group or a t-butyl group. When R² represents any of the above-specified groups, further improvements of the solubility in various types of organic solvents and the formability are enabled.

Examples of the alkylene group having 2 to 4 carbon atoms which may be represented by R^{3A} and R^{3B} include an ethylene group, an n-propylene group, an isopropylene group, an n-butylene group, a sec-butylene group, a t-butylene group, and the like.

R^{3A} and R^{3B} each represent, in light of the improvement of the polymerization reactivity of the monomer for providing the second structural unit, preferably a methylene group or an ethylene group.

In light of the improvement of the polymerization reactivity of the monomer for providing the second structural unit, c and d are each preferably 0 and 1, and more preferably 0. In light of the improvement in the polymerization reactivity of the monomer for providing the second structural unit, g is preferably 0 or 1.

In light of the further improvement of the solubility in various types of organic solvents and the formability, h is preferably 1 or 2, and more preferably 1.

Provided that the total amount of the first, second and third structural units contained in the polymer (A) accounts for 100 mol%, the lower limit of the proportion of the second structural unit contained in the polymer (A) is preferably 1 mol%, more preferably 2 mol%, and still more preferably 5 mol%. The upper limit of the proportion is preferably 95 mol%, more preferably 90 mol%, and still more preferably 85 mol%. When the proportion falls within the above range, further improvements of the solubility in various types of organic solvents and formability is enabled.

### Third Structural Unit

The third structural unit is represented by the following formula (3).

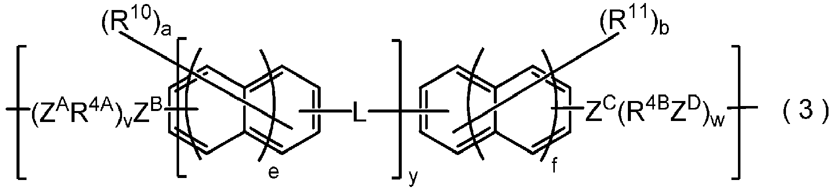

In the above formula (3), R¹⁰ and R¹¹ each independently represent a halogen atom, a monovalent hydrocarbon group having 1 to 20 carbon atoms, a monovalent halogenated hydrocarbon group having 1 to 20 carbon atoms, a nitro group or a cyano group; e and f are each independently an integer of 0 to 2; a and b are each independently an integer of 0 to 8, wherein, in a case where a is no less than 2, a plurality of R¹⁰s may be identical or different, wherein the plurality of R¹⁰s optionally taken together may represent the ring structure through binding, and in a case where b is no less than 2, a plurality of R¹¹s may be identical or different, wherein the plurality of R¹¹s optionally taken together may represent the ring structure through binding; Z^{A} to Z^{D} each independently represent -O- or -S-; R^{4A} and R^{4B} each independently represent a methylene group or an alkylene group having 2 to 4 carbon atoms; v is an integer of 0 to 2, wherein, in a case where v is 2, two R^{4A}s may be identical or different, and two Z^{A} may be identical or different; w is an integer of 0 to 2, wherein, in a case where w is 2, two R^{4B}s may be identical or different, and two Z^{D} may be identical or different; L represents a divalent group represented by the following formula (3-1) or (3-2); and y is an integer of 1 to 3, wherein, in a case where y is no less than 2, a plurality of Ls may be identical or different, and in a case where y is no less than 2 and a is no less than 1, a plurality of R¹⁰s may be identical or different.

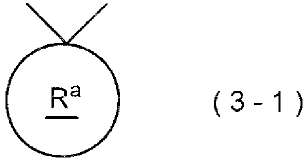

In the above formula (3-1), R^{a} represents a divalent alicyclic hydrocarbon group having 5 to 30 ring atoms or a divalent fluorinated alicyclic hydrocarbon group having 5 to 30 ring atoms.

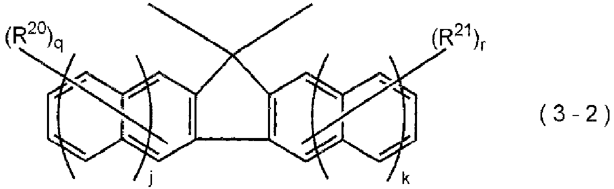

In the above formula (3-2), R²⁰ and R²¹ each independently represent a halogen atom, a monovalent hydrocarbon group having 1 to 20 carbon atoms, a monovalent halogenated hydrocarbon group having 1 to 20 carbon atoms, a nitro group or a cyano group; j and k are each independently an integer of 0 to 2; and q and r are each independently an integer of 0 to 8, wherein, in a case where q is no less than 2, a plurality of R²⁰s may be identical or different, wherein the plurality of R²⁰s optionally taken together may represent the ring structure through binding, and in a case where r is no less than 2, a plurality of R²¹s may be identical or different, wherein the plurality of R²¹s optionally taken together may represent the ring structure through binding.

The halogen atoms which may be represented by R¹⁰ and R¹¹ are exemplified by halogen atoms similar to those exemplified as the halogen atom which may be represented by R¹.

The monovalent hydrocarbon groups each having 1 to 20 carbon atoms which may be represented by R¹⁰ and R¹¹ are exemplified by groups similar to those exemplified as the monovalent hydrocarbon group having 1 to 20 carbon atoms which may be represented by R¹.

The monovalent halogenated hydrocarbon group each having 1 to 20 carbon atoms which may be represented by R¹⁰ and R¹¹ are exemplified by groups similar to those exemplified as the monovalent halogenated hydrocarbon group having 1 to 20 carbon atoms which may be represented by R¹.

In light of an improvement of the polymerization reactivity of the monomer for providing the third structural unit, R¹⁰ and R¹¹ each represent: preferably a halogen atom, a monovalent hydrocarbon group having 1 to 6 carbon atoms, a monovalent halogenated hydrocarbon group having 1 to 6 carbon atoms, a nitro group or a cyano group; more preferably a fluorine atom, a chlorine atom, a methyl group, a t-butyl group, a phenyl group, a nitro group or a cyano group; and still more preferably a fluorine atom, a methyl group, a t-butyl group or a phenyl group.

In light of the improvement of the polymerization reactivity of the monomer for providing the third structural unit, a and b are each preferably 0 and 1, and more preferably 0. From the same perspective, e and f are each preferably 0 and 1, and more preferably 0.

Z^{A} to Z^{D} each preferably represent -O- in light of the structural stability and the polymerization activity of the polymer (A).

The alkylene groups each having 2 to 4 carbon atoms which may be represented by R^{4A} and R^{4B} are exemplified by an ethylene group, an n-propylene group, an isopropylene group, an n-butylene group, a sec-butylene group and a t-butylene group.

R^{4A} and R^{4B} each represent, in light of the improvement of the polymerization reactivity of the monomer for providing the third structural unit, preferably a methylene group or an ethylene group.

In light of the improvement of the polymerization reactivity of the monomer for providing the third structural unit, v and w are each preferably 0 and 1, and more preferably 0.

The divalent alicyclic hydrocarbon group having 5 to 30 ring atoms which may be represented by R^{a} is exemplified by a monocyclic alicyclic hydrocarbon group having 5 to 15 ring atoms, a monocyclic fluorinated alicyclic hydrocarbon group having 5 to 15 ring atoms, a polycyclic alicyclic hydrocarbon group having 7 to 30 ring atoms, and a polycyclic fluorinated alicyclic hydrocarbon group having 7 to 30 ring atoms.

Examples of the monocyclic alicyclic hydrocarbon group having 5 to 15 ring atoms include a cyclopentane-1,1-diyl group, a cyclohexane-1,1-diyl group, a cyclopentane-3,3-diyl group, a cyclohexane-3,3-diyl group, a cyclooctane-1,1-diyl group, a cyclodecane-1,1-diyl group, a cyclododecane-1,1-diyl group, groups obtained by substituting a part or all of hydrogen atoms included in the above groups with monovalent chain hydrocarbon groups each having 1 to 20 carbon atoms, and the like.

Examples of the monocyclic fluorinated alicyclic hydrocarbon group having 5 to 15 ring atoms include groups obtained by substituting with fluorine atoms a part or all of hydrogen atoms included in the group exemplified as the monocyclic alicyclic hydrocarbon group having 5 to 15 ring atoms, and the like.

Examples of the polycyclic alicyclic hydrocarbon group having 7 to 30 ring atoms include: groups obtained by removing two hydrogen atoms bonded to one carbon atom included in the polycyclic alicyclic hydrocarbon such as norbornane, norbornene, adamantane, tricyclo[5.2.1.0^{2,6}]decane, tricyclo[5.2.1.0^{2,6}]heptane, pinane, camphane, decalin, nortricyclene, perhydroanthracene, perhydroazulene, cyclopentanohydrophenanthrene, bicyclo[2.2.2]-2-octene, and the like; groups obtained by substituting a part or all of hydrogen atoms included in the above groups with monovalent chain hydrocarbon groups each having 1 to 20 carbon atoms; and the like.

Examples of the polycyclic fluorinated alicyclic hydrocarbon group having 7 to 30 ring atoms include groups obtained by substituting with fluorine atoms a part or all of hydrogen atoms included in the group exemplified as the polycyclic alicyclic hydrocarbon group having 7 to 30 ring atoms, and the like.

In light of further improving solubility in heat resistance, the divalent group represented by the above formula (3-1) is preferably a cyclopentane-1,1-diyl group, a cyclohexane-1,1-diyl group, and a group obtained by substituting a part or all of hydrogen atoms included in the above groups with monovalent chain hydrocarbon groups each having 1 to 3 carbon atoms, more preferably a group obtained by substituting a part or all of hydrogen atoms included in a cyclohexane-1,1-diyl group and a cyclohexane-1,1-diyl group with monovalent chain hydrocarbon groups each having 1 to 3 carbon atoms, and still more preferably a group obtained by substituting with methyl groups a part or all of hydrogen atoms included in a cyclohexane-1,1-diyl group.

The halogen atoms which may be represented by R²⁰ and R²¹ are exemplified by halogen atoms similar to those exemplified as the halogen atom which may be represented by R¹.

The monovalent hydrocarbon groups each having 1 to 20 carbon atoms which may be represented by R²⁰ and R²¹ are exemplified by groups similar to those exemplified as the monovalent hydrocarbon group having 1 to 20 carbon atoms which may be represented by R¹.

The monovalent halogenated hydrocarbon group having 1 to 20 carbon atoms which may be represented by R²⁰ and R²¹ are exemplified by groups similar to those exemplified as the monovalent halogenated hydrocarbon group having 1 to 20 carbon atoms which may be represented by R¹.

R²⁰ and R²¹ each represent, in light of an improvement of the polymerization reactivity of the monomer for providing the third structural unit: preferably a halogen atom, a monovalent hydrocarbon group having 1 to 3 carbon atoms, a monovalent halogenated hydrocarbon group having 1 to 3 carbon atoms, a nitro group or a cyano group; more preferably a fluorine atom, a chlorine atom, a methyl group, a nitro group or a cyano group; and still more preferably a methyl group.

In light of the improvement of the polymerization reactivity of the monomer for providing the third structural unit, j, k, q and r are each preferably 0 and 1, and more preferably 0.

In light of the improvement of the polymerization reactivity of the monomer for providing the third structural unit, y is preferably 1 or 2, and more preferably 1.

According to claim 1, the third structural unit is a structural unit represented by the above formula (3), wherein L represents the divalent group represented by the above formula (3-1), in light of maintaining the superior solubility in various types of organic solvents and further improving the heat resistance.

Provided that the total amount of the first, second and third structural units contained in the polymer (A) accounts for 100 mol%, the lower limit of the proportion of the third structural unit contained in the polymer (A) is preferably 1 mol%, more preferably 2 mol%, and still more preferably 5 mol%. The upper limit of the proportion is preferably 95 mol%, more preferably 90 mol%, and still more preferably 85 mol%. When the proportion falls within the above range, a further improvement of the heat resistance is enabled.

### Other Structural Units

For the adjustment of molecular weight and the like, the polymer (A) may have other structural units different from the first to third structural units within a range not leading to impairment of the above effects.

The other structural units are exemplified by:
a fourth structural unit represented by the above formula (2), wherein -O(R^{3B}O)_{d}-occupies the meta position or the para position with respect to -(OR^{3A})_{c}O-;
a fifth structural unit represented by the above formula (3), wherein L represents a single bond, -O-, -S-, -CO-, -SO-, -SO₂-, -CONH-, -COO-, a divalent chain hydrocarbon group having 1 to 20 carbon atoms, a divalent fluorinated chain hydrocarbon group having 1 to 20 carbon atoms, a divalent aromatic hydrocarbon group having 6 to 20 carbon atoms other than the group represented by the above formula (3-2), or a divalent fluorinated aromatic hydrocarbon group having 6 to 20 carbon atoms other than the group represented by the above formula (3-2); and the like.

In the case where the polymer (A) has the other structural unit, the lower limit of the proportion of the other structural unit contained in the polymer (A) with respect to the total structural units contained the polymer (A) is preferably 1 mol%, more preferably 5 mol%, and still more preferably 10 mol%. The upper limit of the proportion is preferably 50 mol%, more preferably 45 mol%, and still more preferably 40 mol%. When the proportion falls within the above range, the adjustment of molecular weight within a range not leading to impairment of the above effects is enabled.

### Arrangement of Each Structural Unit

Although the arrangement of each structural unit in the polymer (A) is not particularly limited as long as it has the first, second and third structural units, it is preferred that the polymer (A) has the first, second and third structural units in the main chain in light of further increasing the solubility in various types of organic solvents while further improving the formability and the heat resistance. The term "main chain" as referred to herein means in relative terms the longest linking chain in the polymer.

When the polymer (A) has the first, second and third structural units in the main chain, a decrease in birefringent properties is facilitated in the case of employing the polymer (A) for an optical component, and thus, for example, an improvement of the definition of images is enabled.

### Repeating Unit

The polymer (A) having the first, second and third structural units in the main chain is exemplified by the polymer (A) having, in the main chain thereof: a repeating unit (a) represented by the following formula (a) and including the first and second structural units; and a repeating unit (b) represented by the following formula (b) and including the first and third structural units. 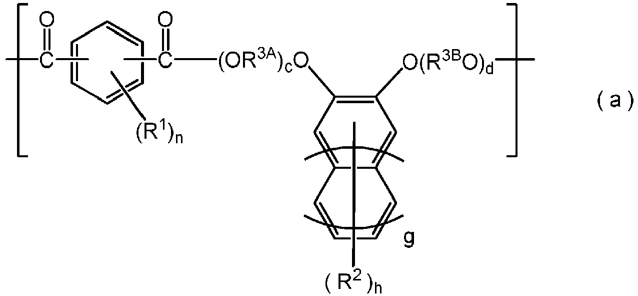 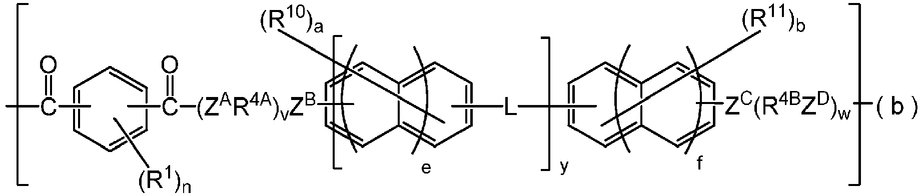 In the above formula (a), R¹ and n are each as defined in the above formula (1). In the above formula (a), R², R^{3A}, R^{3B}, c, d, g and h are each as defined in the above formula (2).

In the above formula (b), R¹ and n are each as defined in the above formula (1). In the above formula (b), R^{4A}, R^{4B}, R¹⁰, R¹¹, a, b, e, f, v, w, y, L and Z^{A} to Z^{D} are each as defined in the above formula (3).

### Synthesis Method of Polymer (A)

The polymer (A) may be obtained by a well-known synthesis method of poly(thio)ester. The synthesis is achieved through, for example, a reaction among: a dicarboxylic acid halide monomer for providing the first structural unit; a diol monomer for providing the second structural unit; a diol monomer or a dithiol monomer for providing the third structural unit; and other compound(s), in an organic solvent or in an interface between the organic solvent and water under predetermined conditions.

The other compound(s) may be exemplified by an alkali metal compound, a chain-end terminator, a phase-transfer catalyst, and a monomer for providing any of the other structural units mentioned above.

The alkali metal compound reacts with the diol monomer and the like to form an alkali metal salt in the processes of the synthesis of the polymer (A). Examples of the alkali metal compound include:
alkali metal hydrides such as lithium hydride, sodium hydride and potassium hydride;
alkali metal hydroxides such as lithium hydroxide, sodium hydroxide and potassium hydroxide;
alkali metal carbonates such as lithium carbonate, sodium carbonate and potassium carbonate; and
alkali metal hydrogencarbonates such as lithium hydrogencarbonate, sodium hydrogencarbonate and potassium hydrogencarbonate.

Of these, alkali metal hydroxides and alkali metal carbonates are preferred, and sodium hydroxide and potassium carbonate are more preferred.

In a case where the alkali metal compound is used, the lower limit of the amount of the alkali metal compound used is, in terms of the amount of metal atoms contained in the alkali metal compound with respect to hydroxyl groups in the total monomers used in the synthesis of the polymer (A), preferably 1.01-fold equivalents, more preferably 1.03-fold equivalents, and particularly preferably 1.05-fold equivalents. On the other hand, the upper limit of the amount of the alkali metal compound used is preferably 1.1-fold equivalents and more preferably 1.07-fold equivalents.

The organic solvent is exemplified by N,N-dimethylacetamide, N,N-dimethylformamide, N-methy-2-pyrrolidone, 1,3-dimethyl-2-imidazolidinone, γ-butyrolactone, sulfolane, dimethyl sulfoxide, diethyl sulfoxide, dimethyl sulfone, diethyl sulfone, diisopropyl sulfone, diphenyl sulfone, diphenyl ether, benzophenone, methylene chloride, benzene, toluene, xylene, benzonitrile, dialkoxybenzene (number of carbon atoms in an alkoxy group: 1 to 4), trialkoxybenzene (number of carbon atoms in an alkoxy group: 1 to 4), hexane, cyclohexane, octane, chlorobenzene, dioxane, tetrahydrofuran, anisole, phenetole, and the like. These organic solvents may be used either alone of one type, or in combination of two or more types thereof.

The reaction temperature in the synthesis of the polymer (A) is, for example, no less than 0 °C and no greater than 250 °C. The reaction time period is, for example, no less than 5 min and no greater than 100 hrs.

### Weight Average Molecular Weight (Mw) of Polymer (A)

The lower limit of the weight average molecular weight (Mw) of the polymer (A) is preferably 500, more preferably 1,000, still more preferably 10,000, and particularly preferably 20,000. The upper limit of the Mw is preferably 300,000, more preferably 200,000, still more preferably 100,000, and particularly preferably 80,000. When the Mw is no less than the lower limit, a further improvement of the heat resistance is enabled. Furthermore, an improvement of the mechanical strength of a molded product such as a film is enabled. On the other hand, when the Mw is no greater than the upper limit, a further improvement of the formability is enabled. It is to be noted that the Mw is determined by gel permeation chromatography (GPC) under the following conditions.

Column: "TSKgel α-M" coupled to "TSKgel Guard Column α" (each available from Tosoh Corporation), etc.
Developing solvent: N-methyl-2-pyrrolidone
Column temperature: 40 °C
Flow rate: 1.0 mL/min
Concentration of sample: 0.75% by mass
Amount of injected sample: 50 µL
Detector: differential refractometer
Standard substance: monodisperse polystyrene

### Glass Transition Temperature (Tg) of Polymer (A)

The lower limit of the glass transition temperature of the polymer (A) is preferably 150 °C, and more preferably 200 °C. The upper limit of the glass transition temperature is preferably 300 °C, more preferably 280 °C, and still more preferably 270 °C. When the glass transition temperature is no less than the lower limit, a further improvement of the heat resistance is enabled. On the other hand, when the glass transition temperature is greater than the upper limit, the formability may be impaired. It is to be noted that the term "glass transition temperature" as referred to herein means a value determined by using, for example, a differential scanning calorimeter in a nitrogen atmosphere at a rate of temperature rise of 20 °C/min.

### Resin Composition

The resin composition contains the polymer (A) and an organic solvent, and may also contain other components within a range not leading to impairment of the effects of the present invention. The resin composition contains the polymer (A) having superior solubility in the various types of organic solvents and superior formability, and may thus be used as a highly versatile resin composition which finds various uses. Since the resin composition contains the polymer (A) having superior heat resistance, the heat deterioration of the resin molded product formed from the resin composition can be inhibited.

Examples of the organic solvent include organic solvents similar to those used in the synthesis of the polymer (A). In addition, since the resin composition contains the polymer (A) having superior solubility in various types of organic solvents, polyhydric alcohol ethers such as diethylene glycol ethyl methyl ether may also be used as the organic solvent. These organic solvents may be used either alone of one type, or in combination of two or more types thereof.

The content of the polymer (A) in the resin composition with respect to the total solid content of the resin composition is, for example, no less than 10% by mass and no greater than 100% by mass.

The content of the organic solvent in the resin composition with respect to 100 parts by mass of the polymer (A) is, for example, no less than 50 parts by mass and no greater than 100,000 parts by mass.

The other component is exemplified by an antioxidant, a lubricant, a fire retardant, an antimicrobial, a colorant, a release agent, a foaming agent, and a polymer other than the polymer (A). The other component may be used either alone of one type, or in combination of two or more types thereof.

Exemplary antioxidant includes a hindered phenol compound, a phosphorus compound, a sulfur compound, a metal compound, a hindered amine compound, and the like. Of these, a hindered phenol compound is preferred.

It is preferred that the hindered phenol compound has a molecular weight of no less than 500. Examples of the hindered phenol compound having a molecular weight of no less than 500 include triethylene
glycol-bis[3-(3-t-butyl-5-methyl-4-hydroxyphenyl)propionate],
1,6-hexanediol-bis[3-(3,5-di-t-butyl-4-hydroxyphenyl)propionate],
2-4-bis-(n-octylthio)-6-(4-hydroxy-3,5-di-t-butylanilino)-3,5-triazine, pentaerythritol tetrakis [3 -(3,5 -t-butyl-4-hydroxyphenyl)propionate],
1,1,3-tris[2-methyl-4-[3-(3,5-di-t-butyl-4-hydroxyphenyl)propionyloxy]-5-t-butylphenyl]but ane, 2,2-thio-diethylenebis[3-(3,5-di-t-butyl-4-hydroxyphenyl)propionate], octadecyl-3-(3,5-di-t-butyl-4-hydroxyphenyl)propionate,
N,N-hexamethylenebis(3,5-di-t-butyl-4-hydroxy-hydrocinnamamide), 1,3,5-trimethyl-2,4,6-tris(3,5-di-t-butyl-4-hydroxybenzyl)benzene,
tris-(3,5-di-t-butyl-4-hydroxybenzyl)-isocyanurate,
3,9-bis[2-[3-(3-t-butyl-4-hydroxy-5-methylphenyl)propionyloxy]-1,1,dimethylethyl]-2,4,8,1 0-tetraoxaspiro[5.5]undecane, and the like.

In a case where the resin composition contains an antioxidant, the content of the antioxidant in the resin composition with respect to 100 parts by mass of the polymer (A) is, for example, no less than 0.01 parts by mass and no greater than 10 parts by mass.

The resin composition may be prepared by uniformly mixing the polymer (A), the organic solvent, and as needed, other components such as an antioxidant. The resin composition thus prepared may be in the form of a liquid, a paste, and the like.

### Resin Molded Product

The resin molded product contains the polymer (A), and may be formed from the resin composition. Due to containing the polymer (A) having superior heat resistance, the inhibition of the heat deterioration of the resin molded product is enabled.

The resin molded product is exemplified by an optical component, and an insulating film for use in printed wiring boards.

Examples of the optical component include:
optical films such as a retardation sheet and a phase difference sheet;
various types of special-purpose lenses such as a conical lens, a spherical lens, and a cylindrical lens;
lens arrays; and the like.

The resin molded product may be produced by, for example, a metal molding process, an extrusion molding process, a solvent casting process, or the like. The metal molding process is suited for the production of lenses. The extrusion molding process and the solvent casting process are suited, and the extrusion molding process is more preferred, for the production of optical films and insulating films for use in printed wiring boards.

The lower limit of the average thickness of the optical film obtained by any of the above processes is preferably 10 µm. On the other hand, the upper limit of the average thickness of the optical film is preferably 1,000 µm, and more preferably 500 µm. When the average thickness of the optical film is less than the lower limit, sufficient film strength may not be ensured. On the other hand, when the average thickness of the optical film is greater than the upper limit, the transparency of the film may not be ensured.

### EXAMPLES

Hereinafter, the embodiments of the present invention will be described in detail by way of Examples, but the present invention is not in any way limited to the Examples.

### ¹H-NMR Analysis

The ¹H-NMR analysis of the polymer was conducted in a deuterochloroform solvent by using a nuclear magnetic resonance spectrometer ("ECX400P" available from JEOL, Ltd.).

### Synthesis of Polymer

### Example 1 (Reference Example useful to understand the invention)

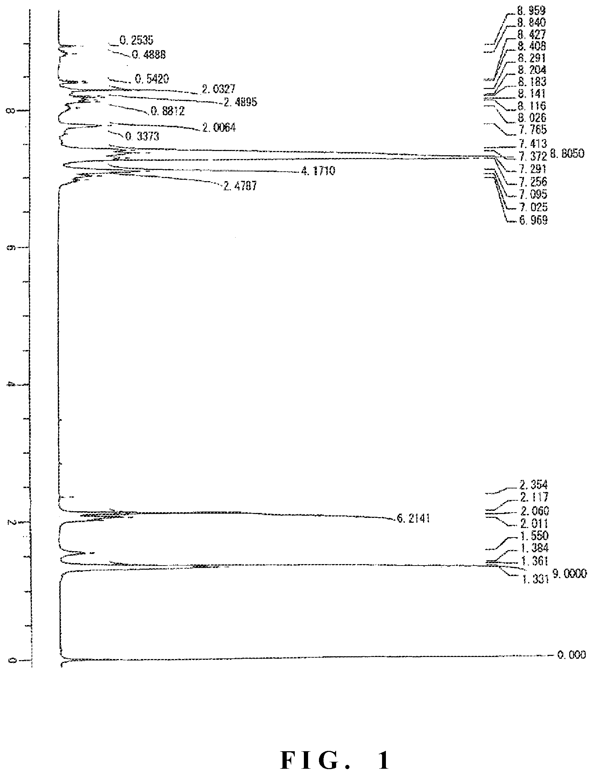

Into a four-neck separable flask equipped with a stirrer, 9,9-bis(4-hydroxy-3-methylphenyl)fluorene (BCFL: 15.1 g, 40.0 mmol), 4-t-butylcatechol (tBuCat: 6.6 g, 40.0 mmol), p-t-butylphenol (PTBP: 0.168 g, 1.1 mmol) as a chain-end terminator, sodium hydroxide (NaOH: 6.8 g, 169.0 mmol) as an alkali metal compound, and tri-n-butylbenzylammonium chloride (TBBAC: 0.175 g, 0.56 mmol) as a phase-transfer catalyst were weighed, and ion exchanged water (176 g) was added thereto to prepare an aqueous diol monomer solution. Separately, terephthaloyl chloride (TPC: 8.2 g, 40.3 mmol) and isophthaloyl chloride (IPC: 8.2 g, 40.3 mmol) were dissolved in toluene (154 mL) to prepare a dicarboxylic acid halide monomer organic solution. The dicarboxylic acid halide monomer organic solution was charged into the aqueous diol monomer solution with vigorous stirring, and an interfacial polycondensation reaction was carried out at room temperature for three hours. After the completion of the reaction, acetic acid was charged into the solution to neutralize the residual alkali metal compound. The resulting solution was left to stand to separate the aqueous and organic phases, and then the aqueous phase was removed by decantation. The remaining organic phase was washed with an equivalent amount of ion exchanged water three times. The resulting organic phase was charged into an excessive amount of methanol with vigorous stirring. Thereafter, the precipitated solid was collected by filtration, and then dried by using a vacuum drier under a reduced pressure at 120 °C for 12 hrs, whereby a polymer of Example 1 represented by the following formula (10) was obtained (amount of polymer obtained: 31 g, yield: 95%). A ¹H-NMR spectrum of the polymer thus obtained is shown in FIG. 1.

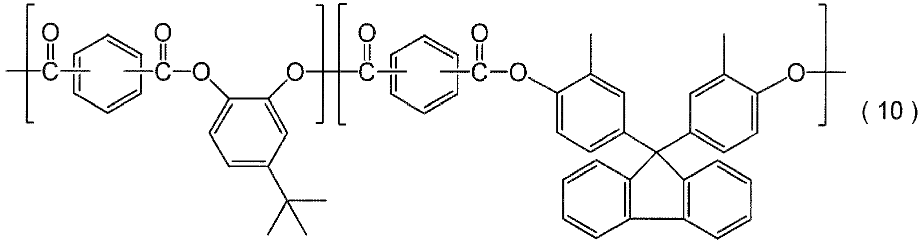

### Example 2 (Reference Example useful to understand the invention)

A polymer of Example 2 was obtained (amount of polymer obtained: 32 g, yield 95%) in a manner similar to the synthesis of the polymer of Example 1, except that the amount of each compound to be used was changed as follows: BCFL (18.9 g, 50.0 mmol), tBuCat (4.5 g, 27.0 mmol), PTBP (0.162 g, 1.1 mmol), TBBAC (0.168 g, 0.54 mmol), NaOH (6.5 g, 163.0 mmol), ion exchanged water (185 g), TPC (7.9 g, 38.7 mmol), IPC (7.9 g, 38.7 mmol) and toluene (148 mL).

### Example 3 (Reference Example useful to understand the invention)

A polymer of Example 3 was obtained (amount of polymer obtained: 32 g, yield 96%) in a manner similar to the synthesis of the polymer of Example 1, except that the amount of each compound to be used was changed as follows: BCFL (18.9 g, 50.0 mmol), tBuCat (4.5 g, 27.0 mmol), PTBP (0.162 g, 1.1 mmol), TBBAC (0.168 g, 0.54 mmol), NaOH (6.5 g, 163.0 mmol), ion exchanged water (185 g), TPC (12.6 g, 62.0 mmol), IPC (3.1 g, 15.5 mmol) and toluene (148 mL).

### Example 4 (Reference Example useful to understand the invention)

A polymer of Example 4 was obtained (amount of polymer obtained: 32 g, yield 96%) in a manner similar to the synthesis of the polymer of Example 1, except that the amount of each compound to be used was changed as follows: BCFL (18.9 g, 50.0 mmol), tBuCat (4.5 g, 27.0 mmol), PTBP (0.162 g, 1.1 mmol), TBBAC (0.168 g, 0.54 mmol), NaOH (6.5 g, 163.0 mmol), ion exchanged water (185 g), TPC (3.1 g, 15.5 mmol), IPC (12.6 g, 62.0 mmol) and toluene (148 mL).

### Example 5 (Reference Example useful to understand the invention)

A polymer of Example 5 was obtained (amount of polymer obtained: 29 g, yield 98%) in a manner similar to the synthesis of the polymer of Example 1, except that the amount of each compound to be used was changed as follows: BCFL (18.9 g, 50.0 mmol), tBuCat (2.1 g, 12.5 mmol), PTBP (0.131 g, 0.88 mmol), TBBAC (0.136 g, 0.44 mmol), NaOH (5.3 g, 132.0 mmol), ion exchanged water (162 g), TPC (6.4 g, 31.5 mmol), IPC (6.4 g, 31.5 mmol) and toluene (120 mL).

### Example 6 (Reference Example useful to understand the invention)

A polymer of Example 6 was obtained (amount of polymer obtained: 29 g, yield 98%) in a manner similar to the synthesis of the polymer of Example 1, except that the amount of each compound to be used was changed as follows: BCFL (18.9 g, 50.0 mmol), tBuCat (2.1 g, 12.5 mmol), PTBP (0.131 g, 0.88 mmol), TBBAC (0.136 g, 0.44 mmol), NaOH (5.3 g, 132.0 mmol), ion exchanged water (162 g), TPC (10.2 g, 50.4 mmol), IPC (2.6 g, 12.6 mmol) and toluene (120 mL).

### Example 7

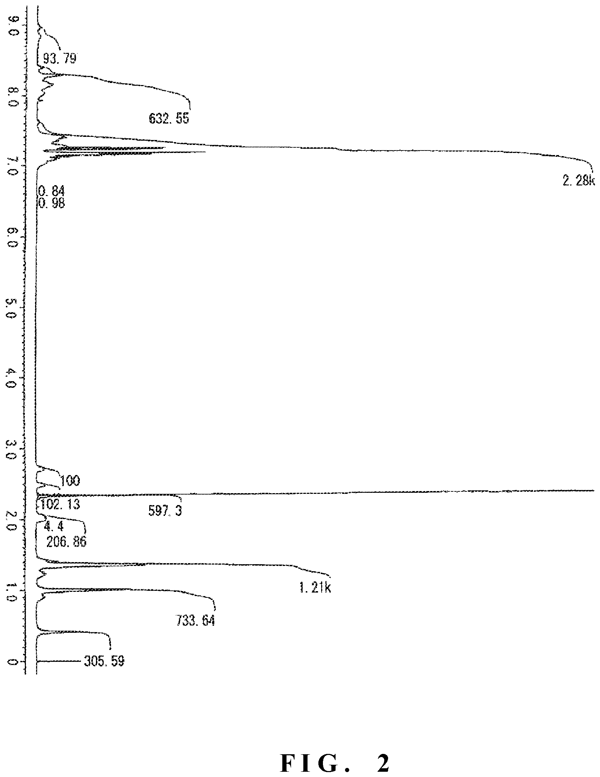

Into a four-neck separable flask equipped with a stirrer, 1,1-bis(4-hydroxyphenyl)-3,3,5-trimethylcyclohexane (TMC: 8.7 g, 28.0 mmol), 4-t-butylcatechol (tBuCat: 4.7 g, 28.0 mmol), sodium hydroxide (NaOH: 4.7 g, 118.0 mmol) as an alkali metal compound, and tri-n-butylbenzylammonium chloride (TBBAC: 0.122 g, 0.39 mmol) as a phase-transfer catalyst were weighed, and ion exchanged water (240 g) was added thereto to prepare an aqueous diol monomer solution. Separately, terephthaloyl chloride (TPC: 5.7 g, 28.0 mmol) and isophthaloyl chloride (IPC: 5.7 g, 28.0 mmol) were dissolved in toluene (228 mL) to prepare a dicarboxylic acid halide monomer organic solution. The dicarboxylic acid halide monomer organic solution was charged into the aqueous diol monomer solution with vigorous stirring, and an interfacial polycondensation reaction was carried out at room temperature for three hours. After the completion of the reaction, acetic acid was charged into the solution to neutralize the residual alkali metal compound. The resulting solution was left to stand to separate the aqueous and organic phases, and then the aqueous phase was removed by decantation. The remaining organic phase was washed with an equivalent amount of ion exchanged water three times. The resulting organic phase was charged into an excessive amount of methanol with vigorous stirring. Thereafter, the precipitated solid was collected by filtration, and then dried by using a vacuum drier under a reduced pressure at 120 °C for 12 hrs, whereby a polymer of Example 7 represented by the following formula (11) was obtained (amount of polymer obtained: 19 g, yield: 90%). A ¹H-NMR spectrum of the polymer thus obtained is shown in FIG. 2.

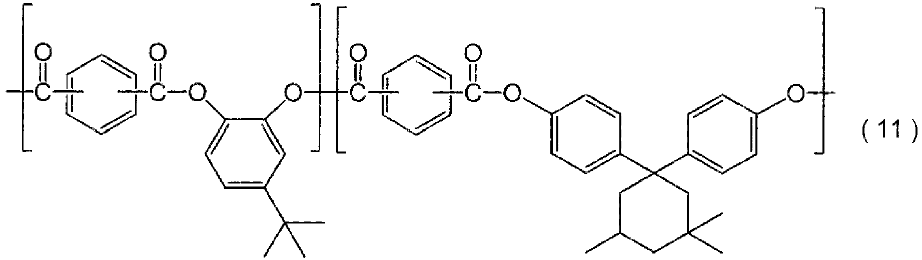

### Example 8

A polymer of Example 8 was obtained (amount of polymer obtained: 19 g, yield 93%) in a manner similar to the synthesis of the polymer of Example 7, except that the amount of each compound to be used was changed as follows: TPC (9.1 g, 44.8 mmol) and IPC (2.2 g, 11.2 mmol).

### Example 9

A polymer of Example 9 was obtained (amount of polymer obtained: 18 g, yield 88%) in a manner similar to the synthesis of the polymer of Example 7, except that the amount of each compound to be used was changed as follows: TPC (2.2 g, 11.2 mmol) and IPC (9.1 g, 44.8 mmol).

### Example 10

Into a four-neck separable flask equipped with a stirrer, 1,1-bis(4-hydroxyphenyl)-3,3,5-trimethylcyclohexane (TMC: 3.7 g, 12.0 mmol), 4-t-butylcatechol (tBuCat: 2.0 g, 12.0 mmol), 2,2-bis(4-hydroxyphenyl)propane (Bis-A: 12.8 g, 56.0 mmol), p-t-butylphenol (PTBP: 0.168 g, 1.1 mmol) as a chain-end terminator, sodium hydroxide (NaOH: 6.8 g, 169.2 mmol) as an alkali metal compound, and tri-n-butylbenzylammonium chloride (TBBAC: 0.18 g, 0.6 mmol) as a phase-transfer catalyst were weighed, and ion exchanged water (156 g) was added thereto to prepare an aqueous diol monomer solution. Separately, terephthaloyl chloride (TPC: 8.2 g, 40.3 mmol) and isophthaloyl chloride (IPC: 8.2 g, 40.3 mmol) were dissolved in toluene (154 mL) to prepare a dicarboxylic acid halide monomer organic solution. The dicarboxylic acid halide monomer organic solution was charged into the aqueous diol monomer solution with vigorous stirring, and an interfacial polycondensation reaction was carried out at room temperature for three hours. After the completion of the reaction, acetic acid was charged into the solution to neutralize the residual alkali metal compound. The resulting solution was left to stand to separate the aqueous and organic phases, and then the aqueous phase was removed by decantation. The remaining organic phase was washed with an equivalent amount of ion exchanged water three times. The resulting organic phase was charged into an excessive amount of methanol with vigorous stirring. Thereafter, the precipitated solid was collected by filtration, and then dried by using a vacuum drier under a reduced pressure at 120 °C for 12 hrs, whereby a polymer of Example 10 represented by the following formula (12) was obtained (amount of polymer obtained: 28 g, yield: 97%).

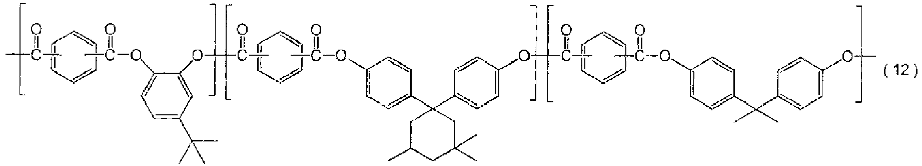

### Example 11

A polymer of Example 11 was obtained (amount of polymer obtained: 35 g, yield 95%) in a manner similar to the synthesis of the polymer of Example 10, except that the amount of each compound to be used was changed as follows: TMC (9.3 g, 30.0 mmol), tBuCat (5.0 g, 30.0 mmol), Bis-A (9.1 g, 40.0 mmol), PTBP (0.21 g, 1.4 mmol), NaOH (8.5 g, 211.0 mmol), TBBAC (0.22 g, 0.7 mmol), ion exchanged water (197 g), TPC (10.2 g, 50.4 mmol), IPC (10.2 g, 50.4 mmol) and toluene (193 mL).

### Example 12

A polymer of Example 12 was obtained (amount of polymer obtained: 25 g, yield 94%) in a manner similar to the synthesis of the polymer of Example 10, except that the amount of each compound to be used was changed as follows: TMC (8.7 g, 28.0 mmol), tBuCat (4.7 g, 28.0 mmol), Bis-A (3.2 g, 14.0 mmol), NaOH (5.9 g, 148.5 mmol), TBBAC (0.15 g, 0.49 mmol), ion exchanged water (139 g), TPC (7.2 g, 35.4 mmol), IPC (7.2 g, 35.4 mmol) and toluene (135 mL).

### Example 13

A polymer of Example 13 represented by the following formula (13) was obtained (amount of polymer obtained: 28 g, yield 93%) in a manner similar to the synthesis of the polymer of Example 10, except that the amount of each compound to be used was changed as follows: TMC (10.9 g, 35.0 mmol), tBuCat (5.8 g, 35.0 mmol), NaOH (7.4 g, 185.0 mmol), TBBAC (0.19 g, 0.61 mmol), PTBP (0.18 g, 1.2 mmol), ion exchanged water (161 g), TPC (8.9 g, 44.1 mmol), IPC (8.9 g, 44.1 mmol) and toluene (169 mL) and that hydroquinone (1.9 g, 17.5 mmol) was used in place of Bis-A.

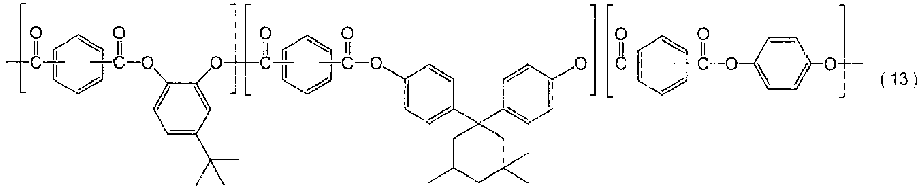

### Example 14

Into a four-neck separable flask equipped with a stirrer, 1,1-bis(4-hydroxyphenyl)-3,3,5-trimethylcyclohexane (TMC: 8.7 g, 28.0 mmol), 4-t-butylcatechol (tBuCat: 0.52 g, 3.1 mmol), sodium hydroxide (NaOH: 2.6 g, 65.3 mmol) as an alkali metal compound, and tri-n-butylbenzylammonium chloride (TBBAC: 0.07 g, 0.2 mmol) as a phase-transfer catalyst were weighed, and ion exchanged water (73 g) was added thereto to prepare an aqueous diol monomer solution. Separately, phthaloyl chloride (oPC: 6.4 g, 31.3 mmol) was dissolved in toluene (60 mL) to prepare a dicarboxylic acid halide monomer organic solution. The dicarboxylic acid halide monomer organic solution was charged into the aqueous diol monomer solution with vigorous stirring, and an interfacial polycondensation reaction was carried out at room temperature for three hours. After the completion of the reaction, acetic acid was charged into the solution to neutralize the residual alkali metal compound. The resulting solution was left to stand to separate the aqueous and organic phases, and then the aqueous phase was removed by decantation. The remaining organic phase was washed with an equivalent amount of ion exchanged water three times. The resulting organic phase was charged into an excessive amount of methanol with vigorous stirring. Thereafter, the precipitated solid was collected by filtration, and then dried by using a vacuum drier under a reduced pressure at 120 °C for 12 hrs, whereby a polymer of Example 14 represented by the following formula (14) was obtained (amount of polymer obtained: 10 g, yield: 78%).

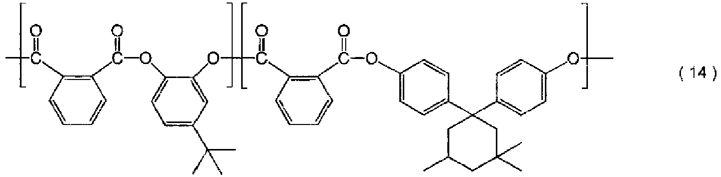

### Comparative Example 1

Into a four-neck separable flask equipped with a stirrer, 2,2-bis(4-hydroxyphenyl)propane (Bis-A: 22.8 g, 100.0 mmol), p-t-butylphenol (PTBP: 0.75 g, 5.0 mmol) as a chain-end terminator, sodium hydroxide (NaOH: 8.6 g, 215.0 mmol) as an alkali metal compound, and tri-n-butylbenzylammonium chloride (TBBAC: 0.22 g, 0.7 mmol) as a phase-transfer catalyst were weighed, and ion exchanged water (430 g) was added thereto to prepare an aqueous diol monomer solution. Separately, terephthaloyl chloride (TPC: 10.4 g, 51.3 mmol) and isophthaloyl chloride (IPC: 10.4 g, 51.3 mmol) were dissolved in methylene chloride (272 mL) to prepare a dicarboxylic acid halide monomer organic solution. The dicarboxylic acid halide monomer organic solution was charged into the aqueous diol monomer solution with vigorous stirring, and an interfacial polycondensation reaction was carried out at room temperature for three hours. After the completion of the reaction, acetic acid was charged into the solution to neutralize the residual alkali metal compound. The resulting solution was left to stand to separate the aqueous and organic phases, and then the aqueous phase was removed by decantation. The remaining organic phase was washed with an equivalent amount of ion exchanged water three times. The resulting organic phase was charged into an excessive amount of methanol with vigorous stirring. Thereafter, the precipitated solid was collected by filtration, and then dried by using a vacuum drier under a reduced pressure at 120 °C for 12 hrs, whereby a polymer of Comparative Example 1 represented by the following formula (20) was obtained (amount of polymer obtained: 35 g, yield: 95%).

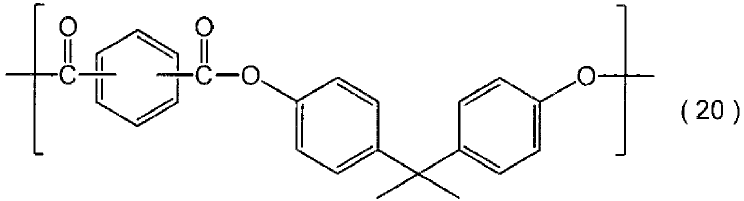

### Comparative Example 2

Into a four-neck separable flask equipped with a stirrer, 1,1-bis(4-hydroxyphenyl)-3,3,5-trimethylcyclohexane (TMC: 16.6 g, 53.6 mmol), 2,2-bis(4-hydroxyphenyl)propane (Bis-A: 28.5 g, 125.0 mmol), p-t-butylphenol (PTBP: 0.64 g, 4.3 mmol) as a chain-end terminator, sodium hydroxide (NaOH: 15.1 g, 380.0 mmol) as an alkali metal compound, and tri-n-butylbenzylammonium chloride (TBBAC: 0.39 g, 1.25 mmol) as a phase-transfer catalyst were weighed, and ion exchanged water (157 g) was added thereto to prepare an aqueous diol monomer solution. Separately, terephthaloyl chloride (TPC: 18.3 g, 90.4 mmol) and isophthaloyl chloride (IPC: 18.3 g, 90.4 mmol) were dissolved in toluene (152 mL) to prepare a dicarboxylic acid halide monomer organic solution. The dicarboxylic acid halide monomer organic solution was charged into the aqueous diol monomer solution with vigorous stirring, and an interfacial polycondensation reaction was carried out at room temperature for three hours. After the completion of the reaction, acetic acid was charged into the solution to neutralize the residual alkali metal compound. The resulting solution was left to stand to separate the aqueous and organic phases, and then the aqueous phase was removed by decantation. The remaining organic phase was washed with an equivalent amount of ion exchanged water three times. The resulting organic phase was charged into an excessive amount of methanol with vigorous stirring. Thereafter, the precipitated solid was collected by filtration, and then dried by using a vacuum drier under a reduced pressure at 120 °C for 12 hrs, whereby a polymer of Comparative Example 2 represented by the following formula (21) was obtained (amount of polymer obtained: 69 g, yield: 95%).

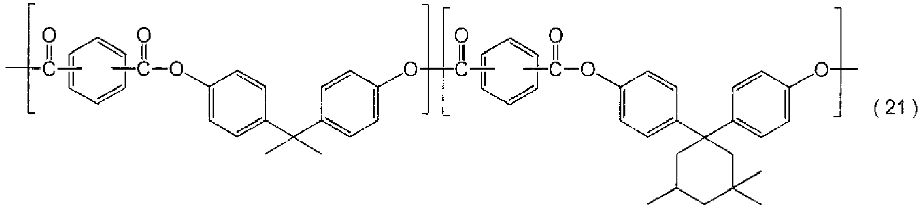

### Comparative Example 3

Into a four-neck separable flask equipped with a stirrer, 2,2-bis(4-hydroxyphenyl)propane (Bis-A: 8.0 g, 35.0 mmol), catechol (Cat: 3.9 g, 35.0 mmol), p-t-butylphenol (PTBP: 0.25 g, 1.7 mmol) as a chain-end terminator, sodium hydroxide (NaOH: 5.9 g, 148.8 mmol) as an alkali metal compound, and tri-n-butylbenzylammonium chloride (TBBAC: 0.15 g, 0.49 mmol) as a phase-transfer catalyst were weighed, and ion exchanged water (240 g) was added thereto to prepare an aqueous diol monomer solution. Separately, terephthaloyl chloride (TPC: 7.2 g, 35.4 mmol) and isophthaloyl chloride (IPC: 7.2 g, 35.4 mmol) were dissolved in toluene (188 mL) to prepare a dicarboxylic acid halide monomer organic solution. The dicarboxylic acid halide monomer organic solution was charged into the aqueous diol monomer solution with vigorous stirring, and an interfacial polycondensation reaction was carried out at room temperature for three hours. After the completion of the reaction, acetic acid was charged into the solution to neutralize the residual alkali metal compound. The resulting solution was left to stand to separate the aqueous and organic phases, and then the aqueous phase was removed by decantation. The remaining organic phase was washed with an equivalent amount of ion exchanged water three times. The resulting organic phase was charged into an excessive amount of methanol with vigorous stirring. Thereafter, the precipitated solid was collected by filtration, and then dried by using a vacuum drier under a reduced pressure at 120 °C for 12 hrs, whereby a polymer of Comparative Example 3 represented by the following formula (22) was obtained (amount of polymer obtained: 11 g, yield: 51%).

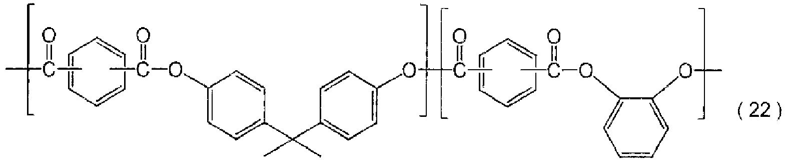

### Evaluations

According to the following methods, the weight average molecular weight (Mw), the glass transition temperature (Tg), the solubility in various types of organic solvents, the melt flow rate (MFR) and the stress-optical coefficient (CR) of the polymers thus obtained were evaluated. The results of the evaluations are shown in Table 1. It is to be noted that "-" in Table 1 means that no evaluation was made in regard to the evaluation item concerned.

### Weight Average Molecular Weight (Mw)

The weight average molecular weight (Mw) of each polymer was determined by using a GPC apparatus ("HLC-8320 GPC" available from Tosoh Corporation) under the following conditions.
Column: "TSKgel α-M" coupled to "TSKgel Guard Column α" (each available from Tosoh Corporation)
Developing solvent: N-methyl-2-pyrrolidone
Column temperature: 40 °C
Flow rate: 1.0 mL/min
Concentration of sample: 0.75% by mass
Amount of injected sample: 50 µL
Detector: differential refractometer
Standard substance: monodisperse polystyrene

### Glass Transition Temperature (Tg) [°C]

The temperature corresponding to a point of intersection of a baseline and a tangent line through an inflection point which were drawn with respect to a DSC temperature rise curve in the thermogram obtained by a differential scanning calorimeter ("Thermo Plus DSC8230" available from Rigaku Corporation) in a nitrogen atmosphere at a temperature rise rate of 20 °C/min was defined as the glass transition temperature (Tg) of each polymer. The temperature corresponding to a peak in a DDSC curve, which is a curve obtained by differentiating the DSC temperature rise curve, was defined as the inflection point. The DSC baseline was determined with appropriate references to the DDSC curve.

### Solubility in Various Types of Organic Solvents

The solubility of each polymer in various types of solvents was determined by adding each polymer to various types of organic solvents shown in Table 1 to obtain solutions each containing the polymer at a 10% mass concentration and by stirring the resulting solutions, and was evaluated as being: "A" in a case where no precipitates were visually observed; and "B" in a case where precipitates were visually observed.

### Melt Flow Rate (MFR) [g/10 min]

The melt flow rate (MFR) of each polymer was determined by using a semi-auto melt indexer (available from Tateyama Kagaku Industry Co., Ltd.) in accordance with JIS-K-7210 (2014), under a load of 98 N at a temperature of 340 °C. It is to be noted that MFR is one of the indices of formability, and the polymer having a greater value of MFR is more easily fluidized and is thus evaluated to have superior formability.

### Stress-Optical Coefficient (CR) [Br]

The stress-optical coefficient (CR) of each polymer was determined by a well-known process (Polymer Journal, Vol. 27, No. 9, P. 943 to 950 (1995)). Specifically, an appropriate amount of each polymer was dissolved in methylene chloride to prepare a polymer solution, and the resulting solution was subjected to casting for film formation on a glass plate, and dried overnight under a normal pressure at room temperature. Thereafter, the remaining methylene chloride was removed by using a vacuum drier to obtain a film having an average thickness of 100 µm. The film was stretched under a predetermined load at a temperature of Tg + 20 °C, and then was gradually cooled to room temperature under the load. CR was calculated based on the stress applied on the film, and the resulting phase difference measured at a wavelength of 550 nm. The phase difference was measured by using "RETS spectroscope" (available from Otsuka Electronics Co., Ltd.). The smaller CR value means that a decrease in low birefringent properties is enabled. "Br" which is the unit of CR corresponds to 10⁻¹² Pa⁻¹.

**Table 1**

| | Mw | Tg (°C) | Solubility in various types of solvents | | | | | MFR (g/10 min) | CR (Br) |
|---|---|---|---|---|---|---|---|---|---|
| | | | EDM¹⁾ | MMP²⁾ | BuOAc³⁾ | PGMEA⁴⁾ | GBL⁵⁾ | | |
| Example 1 | 30,000 | 223 | A | A | B | B | A | - | - |
| Example 2 | 47,000 | 243 | A | B | B | B | A | - | 250 |
| Example 3 | 34,000 | 251 | A | A | B | B | A | - | - |
| Example 4 | 49,000 | 235 | A | B | B | B | A | - | - |
| Example 5 | 30,000 | 253 | A | B | B | B | A | - | - |
| Example 6 | 32,000 | 267 | A | B | B | B | A | - | 360 |
| Example 7 | 57,000 | 217 | A | A | A | A | A | 41 | 3,300 |
| Example 8 | 58,000 | 230 | A | A | B | B | A | - | 3,400 |
| Example 9 | 51,000 | 206 | A | A | A | B | A | - | 3,200 |
| Example 10 | 78,000 | 208 | A | B | B | B | A | - | - |
| Example 11 | 47,000 | 207 | A | A | B | B | A | - | - |
| Example 12 | 50,000 | 210 | A | A | B | B | A | - | - |
| Example 13 | 18,000 | 206 | A | A | B | B | A | - | - |
| Example 14 | 40,000 | 210 | A | A | B | B | A | - | 940 |
| Comparative Example 1 | 40,000 | 190 | B | B | B | B | B | - | 9,000 |
| Comparative Example 2 | 73,000 | 226 | B | B | B | B | A | no fluidization observed, no MFR determined | 6,800 |
| Comparative Example 3 | 36,000 | 154 | A | A | B | B | A | - | 7,200 |

| | | | | | | | | | |
|---|---|---|---|---|---|---|---|---|---|
| 1) diethylene glycol ethyl methyl ether 2) methyl 3-methoxypropionate 3) butyl acetate 4) propylene glycol-1-monomethyl ether-2-acetate 5) γ-butyrolactone | | | | | | | | | |

As is clear from Table 1, the polymers of Examples 1 to 14 each had a greater value of Tg, which was no less than 200 °C, and each of the polymers was soluble in two or more different types of the organic solvents (rated A). On the other hand, the polymer of Comparative Example 1 had a smaller value of Tg compared to that of the above Examples and was soluble in none of the above organic solvents (rated B). The polymer of Comparative Example 2 was soluble in only one type of the organic solvent although the Tg of the polymer was on the same level as that of each polymer of the above Examples. The polymer of Comparative Example 3 was soluble in two or more different types of the organic solvents whereas the Tg of the polymer was significantly lower than the Tg of each polymer of the above Examples. Furthermore, as is clear from Table 1, it has been proven based on the MFR that the polymer of Example 7 may be employed in various types of forming processes. On the other hand, the fluidization of the polymer of Comparative Example 2 was not observed under the above measurement conditions, and thus the determination of the MFR value failed for the polymer. From these results, it has proven that the present invention enables an increase in solubility in various types of organic solvents, and improvements of formability and heat resistance.

Moreover, as shown in Table 1, the CR of each of the polymers of Examples 2, 6 to 9, and 14 was smaller than the CR of each of the polymers of Comparative Examples 1 to 3, revealing that a decrease in birefringent properties is enabled.

### INDUSTRIAL APPLICABILITY

The present invention is capable of providing a polymer having increased solubility in various types of organic solvents, improved formability and improved heat resistance, and providing a resin composition and a resin molded product containing the polymer.

## Claims

1. A polymer comprising:
a first structural unit represented by formula (1);
a second structural unit represented by formula (2); and
a third structural unit represented by formula (3), 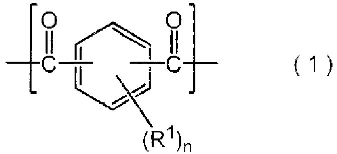 wherein in the formula (1), R¹ represents a halogen atom, a monovalent hydrocarbon group having 1 to 20 carbon atoms, a monovalent halogenated hydrocarbon group having 1 to 20 carbon atoms, a nitro group or a cyano group; and n is an integer of 0 to 4, wherein, in a case where n is no less than 2, a plurality of R¹s are identical or different, wherein the plurality of R¹s optionally taken together represent a ring structure through binding, 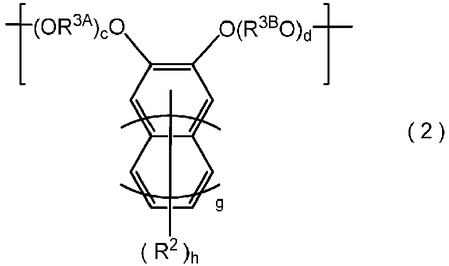 wherein in the formula (2), R² represents a halogen atom, a monovalent hydrocarbon group having 1 to 20 carbon atoms, a monovalent halogenated hydrocarbon group having 1 to 20 carbon atoms, a nitro group or a cyano group; g is an integer of 0 to 2; h is an integer of 0 to 8, wherein, in a case where h is no less than 2, a plurality of R²s are identical or different, wherein the plurality of R²s optionally taken together represent a ring structure through binding; R^{3A} and R^{3B} each independently represent a methylene group or an alkylene group having 2 to 4 carbon atoms; c is an integer of 0 to 2, wherein, in a case where c is 2, two R^{3A}s are identical or different; and d is an integer of 0 to 2, wherein, in a case where d is 2, two R^{3B}s are identical or different, 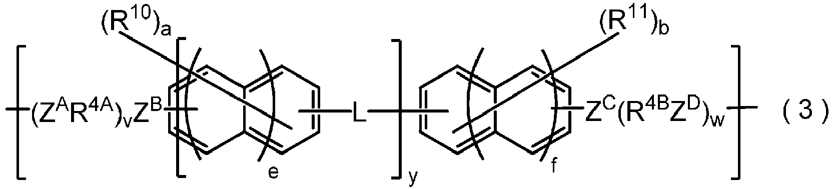 wherein in the formula (3), R¹⁰ and R¹¹ each independently represent a halogen atom, a monovalent hydrocarbon group having 1 to 20 carbon atoms, a monovalent halogenated hydrocarbon group having 1 to 20 carbon atoms, a nitro group or a cyano group; e and f are each independently an integer of 0 to 2; a and b are each independently an integer of 0 to 8, wherein, in a case where a is no less than 2, a plurality of R¹⁰s are identical or different, wherein the plurality of R¹⁰s optionally taken together represent a ring structure through binding, and in a case where b is no less than 2, a plurality of R¹¹s are identical or different, wherein the plurality of R¹¹s optionally taken together represent a ring structure through binding; Z^{A} to Z^{D} each independently represent -O- or -S-; R^{4A} and R^{4B} each independently represent a methylene group or an alkylene group having 2 to 4 carbon atoms; v is an integer of 0 to 2, wherein, in a case where v is 2, two R^{4A}s are identical or different, and two Z^{A}s are identical or different; w is an integer of 0 to 2, wherein, in a case where w is 2, two R^{4B}s are identical or different, and two Z^{D}s are identical or different; L represents a divalent group represented by formula (3-1); and y is an integer of 1 to 3, wherein, in a case where y is no less than 2, a plurality of Ls are identical or different, and in a case where y is no less than 2 and a is no less than 1, a plurality of R¹⁰s are identical or different, 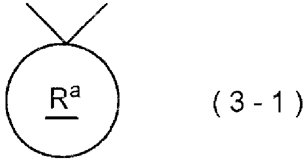 wherein in the formula (3-1), R^{a} represents a divalent alicyclic hydrocarbon group having 5 to 30 ring atoms or a divalent fluorinated alicyclic hydrocarbon group having 5 to 30 ring atoms.

2. The polymer according to claim 1, wherein,
in the formula (3-1), R^{a} represents a monocyclic alicyclic hydrocarbon group having 5 to 15 ring atoms or a monocyclic fluorinated alicyclic hydrocarbon group having 5 to 15 ring atoms.

3. The polymer according to claim 1, wherein,
in the formula (3-1), R^{a} represents a polycyclic alicyclic hydrocarbon group having 7 to 30 ring atoms or a polycyclic fluorinated alicyclic hydrocarbon group having 7 to 30 ring atoms.

4. The polymer according to any one of claims 1 to 3, wherein the polymer has a polystyrene equivalent weight average molecular weight of no less than 500 and no greater than 300,000.

5. A resin composition comprising the polymer according to any one of claims 1 to 4 and an organic solvent.

6. A resin molded product comprising the polymer according to any one of claims 1 to 4.

## Patentansprüche

1. Ein Polymer, das umfasst:
eine erste Struktureinheit, dargestellt durch die Formel (1);
eine zweite Struktureinheit, dargestellt durch die Formel (2); und
eine dritte Struktureinheit, dargestellt durch die Formel (3), 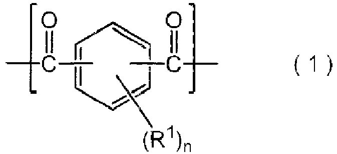 wobei in der Formel (1) R¹ ein Halogenatom, eine einwertige Kohlenwasserstoffgruppe mit 1 bis 20 Kohlenstoffatomen, eine einwertige halogenierte Kohlenwasserstoffgruppe mit 1 bis 20 Kohlenstoffatomen, eine Nitrogruppe oder eine Cyanogruppe darstellt; und n eine ganze Zahl von 0 bis 4 ist, wobei in einem Fall, in dem n nicht weniger als 2 ist, eine Vielzahl von R¹s identisch oder unterschiedlich sind, wobei die Vielzahl von R¹s optional durch Verbinden zusammengenommen eine Ringstruktur darstellen, 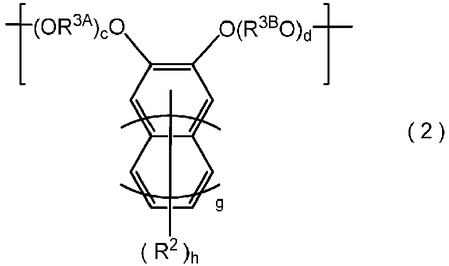 wobei in der Formel (2) R² ein Halogenatom, eine einwertige Kohlenwasserstoffgruppe mit 1 bis 20 Kohlenstoffatomen, eine einwertige halogenierte Kohlenwasserstoffgruppe mit 1 bis 20 Kohlenstoffatomen, eine Nitrogruppe oder eine Cyanogruppe darstellt; g eine ganze Zahl von 0 bis 2 ist; h eine ganze Zahl von 0 bis 8 ist, wobei in einem Fall, in dem h nicht weniger als 2 ist, eine Vielzahl von R²s identisch oder unterschiedlich sind, wobei die Vielzahl von R²s optional durch Verbinden zusammengenommen eine Ringstruktur darstellen; R^{3A} und R^{3B} jeweils unabhängig eine Methylengruppe oder eine Alkylengruppe mit 2 bis 4 Kohlenstoffatomen darstellen; c eine ganze Zahl von 0 bis 2 ist, wobei in einem Fall, in dem c 2 ist, zwei R^{3A}s identisch oder unterschiedlich sind; und d eine ganze Zahl von 0 bis 2 ist, wobei in einem Fall, in dem d 2 ist, zwei R^{3B}s identisch oder unterschiedlich sind, 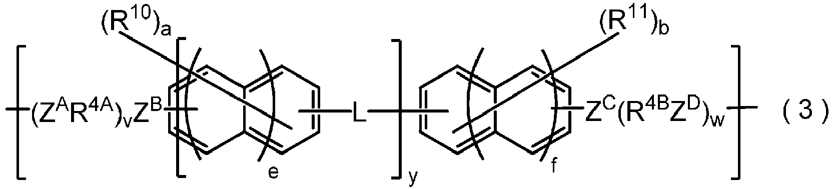 wobei in der Formel (3) R¹⁰ und R¹¹ jeweils unabhängig ein Halogenatom, eine einwertige Kohlenwasserstoffgruppe mit 1 bis 20 Kohlenstoffatomen, eine einwertige halogenierte Kohlenwasserstoffgruppe mit 1 bis 20 Kohlenstoffatomen, eine Nitrogruppe oder eine Cyanogruppe darstellen; e und f jeweils unabhängig eine ganze Zahl von 0 bis 2 sind; a und b jeweils unabhängig eine ganze Zahl von 0 bis 8 sind, wobei in einem Fall, in dem a nicht weniger als 2 ist, eine Vielzahl von R¹⁰s identisch oder unterschiedlich sind, wobei die Vielzahl von R¹⁰s optional durch Verbinden zusammengenommen eine Ringstruktur darstellen, und in einem Fall, in dem b nicht weniger als 2 ist, eine Vielzahl von R¹¹s identisch oder unterschiedlich sind, wobei die Vielzahl von R¹¹s optional durch Verbinden zusammengenommen eine Ringstruktur darstellen; Z^{A} bis Z^{D} jeweils unabhängig -O- oder -S- darstellen; R^{4A} und R^{4B} jeweils unabhängig eine Methylengruppe oder eine Alkylengruppe mit 2 bis 4 Kohlenstoffatomen darstellen; v eine ganze Zahl von 0 bis 2 ist, wobei in einem Fall, in dem v 2 ist, zwei R^{4A}s identisch oder unterschiedlich sind und zwei Z^{A}s identisch oder unterschiedlich sind; w eine ganze Zahl von 0 bis 2 ist, wobei in einem Fall, in dem w 2 ist, zwei R^{4B}s identisch oder unterschiedlich sind und zwei Z^{D}s identisch oder unterschiedlich sind; L eine zweiwertige Gruppe darstellt, die durch die Formel (3-1) dargestellt ist; und y ist eine ganze Zahl von 1 bis 3, wobei in einem Fall, in dem y nicht weniger als 2 ist, eine Vielzahl von Ls identisch oder unterschiedlich sind, und in einem Fall, in dem y nicht weniger als 2 ist und a nicht weniger als 1 ist, eine Vielzahl von R¹⁰s identisch oder unterschiedlich sind, 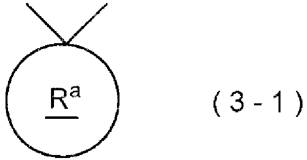 wobei in der Formel (3-1) R^{a} eine zweiwertige alicyclische Kohlenwasserstoffgruppe mit 5 bis 30 Ringatomen oder eine zweiwertige fluorierte alicyclische Kohlenwasserstoffgruppe mit 5 bis 30 Ringatomen darstellt.

2. Polymer nach Anspruch 1, wobei
in der Formel (3-1) R^{a} eine monocyclische alicyclische Kohlenwasserstoffgruppe mit 5 bis 15 Ringatomen oder eine monocyclische fluorierte alicyclische Kohlenwasserstoffgruppe mit 5 bis 15 Ringatomen darstellt.

3. Polymer nach Anspruch 1, wobei
in der Formel (3-1) R^{a} eine polycyclische alicyclische Kohlenwasserstoffgruppe mit 7 bis 30 Ringatomen oder eine polycyclische fluorierte alicyclische Kohlenwasserstoffgruppe mit 7 bis 30 Ringatomen darstellt.

4. Polymer nach einem der Ansprüche 1 bis 3, wobei das Polymer ein Polystyrol-äquivalentes gewichtsgemitteltes Molekulargewicht von nicht weniger als 500 und nicht mehr als 300.000 aufweist.

5. Harzzusammensetzung, die das Polymer nach einem der Ansprüche 1 bis 4 und ein organisches Lösungsmittel umfasst.

6. Harzformprodukt, das das Polymer nach einem der Ansprüche 1 bis 4 umfasst.

## Revendications

1. Polymère comprenant :
un premier motif structurel représenté par la formule (1) ;
un deuxième motif structurel représenté par la formule (2) ; et
un troisième motif structurel représenté par la formule (3), 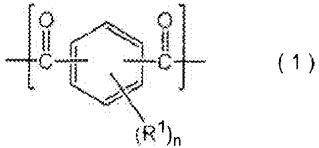 où, dans la formule (1), R¹ représente un atome d'halogène, un groupe hydrocarboné monovalent ayant 1 à 20 atomes de carbone, un groupe hydrocarboné halogéné monovalent ayant 1 à 20 atomes de carbone, un groupe nitro ou un groupe cyano ; et n est un entier de 0 à 4, où, dans le cas où n n'est pas inférieur à 2, plusieurs R¹ sont identiques ou différents, et les plusieurs R¹ éventuellement pris ensemble représentent une structure cyclique par l'intermédiaire d'une liaison, 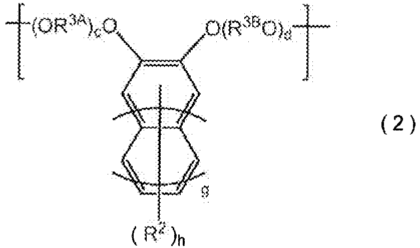 où, dans la formule (2), R² représente un atome d'halogène, un groupe hydrocarboné monovalent ayant 1 à 20 atomes de carbone, un groupe hydrocarboné halogéné monovalent ayant 1 à 20 atomes de carbone, un groupe nitro ou un groupe cyano ; g est un entier de 0 à 2 ; h est un entier de 0 à 8, où, dans le cas où h n'est pas inférieur à 2, plusieurs R² sont identiques ou différents, et les plusieurs R² éventuellement pris ensemble représentent une structure cyclique par l'intermédiaire d'une liaison ; chacun de R^{3A} et R^{3B} représente indépendamment un groupe méthylène ou un groupe alkylène ayant 2 à 4 atomes de carbone ; c est un entier de 0 à 2, où, dans le cas où c vaut 2, deux R^{3A} sont identiques ou différents ; et d est un entier de 0 à 2, où, dans le cas où d vaut 2, deux R^{3B} sont identiques ou différents, 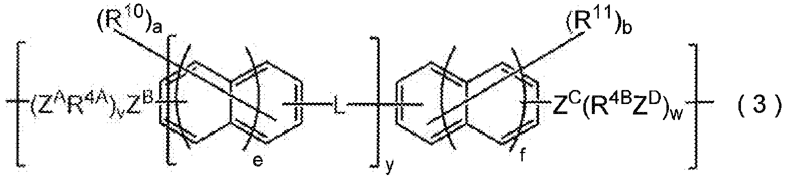 où, dans la formule (3), chacun de R¹⁰ et R¹¹ représente indépendamment un atome d'halogène, un groupe hydrocarboné monovalent ayant 1 à 20 atomes de carbone, un groupe hydrocarboné halogéné monovalent ayant 1 à 20 atomes de carbone, un groupe nitro ou un groupe cyano ; chacun de e et f est indépendamment un entier de 0 à 2 ; et chacun de a et b est indépendamment un entier de 0 à 8, où, dans le cas où a vaut au moins 2, plusieurs R¹⁰ sont identiques ou différents, lesquels plusieurs R¹⁰ éventuellement pris ensemble représentent une structure cyclique par l'intermédiaire d'une liaison, et dans le cas où b vaut au moins 2, plusieurs R¹¹ sont identiques ou différents, lesquels plusieurs R¹¹ éventuellement pris ensemble représentent une structure cyclique par l'intermédiaire d'une liaison ; chacun de Z^{A} à Z^{D} représente indépendamment -O- ou -S- ; chacun de R^{4A} et R^{4B} représente indépendamment un groupe méthylène ou un groupe alkylène ayant 2 à 4 atomes de carbone ; v est un entier de 0 à 2, où, dans le cas où v vaut 2, deux R^{4A} sont identiques ou différents, et deux Z^{A} sont identiques ou différents ; w est un entier de 0 à 2, où, dans le cas où w vaut 2, deux R^{4B} sont identiques ou différents, et deux Z^{D} sont identiques ou différents ; L représente un groupe divalent représenté par la formule (3-1) ; et y est un entier de 1 à 3, où, dans le cas où y vaut au moins 2, plusieurs L sont identiques ou différents, et dans le cas où y vaut au moins 2 et a vaut au moins 1, plusieurs R¹⁰ sont identiques ou différents, 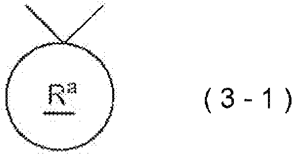 où, dans la formule (3-1), R^{a} représente un groupe hydrocarboné alicyclique divalent ayant 5 à 30 atomes de cycle ou un groupe hydrocarboné alicyclique fluoré divalent ayant 5 à 30 atomes de cycle.

2. Polymère selon la revendication 1, dans lequel, dans la formule (3-1), R^{a} représente un groupe hydrocarboné alicyclique monocyclique ayant 5 à 15 atomes de cycle ou un groupe hydrocarboné alicyclique fluoré monocyclique ayant 5 à 15 atomes de cycle.

3. Polymère selon la revendication 1, dans lequel, dans la formule (3-1), R^{a} représente un groupe hydrocarboné alicyclique polycyclique ayant 7 à 30 atomes de cycle ou un groupe hydrocarboné alicyclique fluoré polycyclique ayant 7 à 30 atomes de cycle.

4. Polymère selon l'une quelconque des revendications 1 à 3, dans lequel le polymère a une masse moléculaire moyenne en masse équivalente de styrène non inférieure à 500 et non supérieure à 300 000.

5. Composition de résine comprenant le polymère selon l'une quelconque des revendications 1 à 4 et un solvant organique.

6. Produit moulé en résine comprenant le polymère selon l'une quelconque des revendications 1 à 4.
